# EUROPÄISCHE PATENTSCHRIFT

(11) **EP 2 763 576 B1**
(45) Veröffentlichungstag und Bekanntmachung des Hinweises auf die Patenterteilung: **03.08.2016**
(21) Anmeldenummer: 11784921.6
(22) Anmeldetag: 16.11.2011
(51) Int. Cl.: A47J 41/00, A47J 27/21

(54) **DOPPELWANDIGER FLÜSSIGKEITSBEHÄLTER**
DOUBLE-WALLED LIQUID CONTAINER
CONTENANT DE LIQUIDE À DOUBLE PAROI

(30) Priorität: 04.10.2011 CH 16232011
(43) Veröffentlichungstag der Anmeldung: 13.08.2014
(73) Patentinhaber: PI-Design AG, 6234 Triengen (CH)
(72) Erfinder: BODUM, Jørgen, CH-6045 Meggen (CH)
(74) Vertreter: Rutz, Andrea
(86) Internationale Anmeldenummer: PCT/CH2011/000274
(87) Internationale Veröffentlichungsnummer: WO 2012/016344

(56) Entgegenhaltungen:
- CN-Y- 201 016 037
- DE-U1- 8 813 591
- US-A- 3 365 092

## Beschreibung

### TECHNISCHES GEBIET

Die vorliegende Erfindung betrifft einen doppelwandigen Flüssigkeitsbehälter. Dabei kann es sich insbesondere um einen Wasserkocher handeln.

### STAND DER TECHNIK

Flüssigkeitsbehälter sind unter anderem in Form von Isolationsbehältern bekannt, in welchen ein warmes oder kaltes Getränk über eine möglichst lange Zeit warm bzw. kalt gehalten werden kann. Um die Isolationseigenschaften zu verbessern, sind derartige Flüssigkeitsbehälter üblicherweise doppelwandig ausgestaltet.

Doppelwandige Isolationsbehälter sind traditionellerweise, wie beispielsweise in der DE 89 08 532 gezeigt, derart ausgestaltet, dass ein durchgehend doppelwandig ausgebildeter Glasbehälter in einem umgebenden Mantel gehalten ist. Problematisch ist bei diesen Flüssigkeitsbehältern jedoch die Bruchempfindlichkeit von Glas und insbesondere von doppelwandigen Glasgefässen.

In der DE 88 13 591 ist ein Flüssigkeitsbehälter gezeigt, bei dem ein erster Behälter in Form eines Glaskörpers in einen aus Kunststoff hergestellten, zweiten Behälter eingesetzt ist. Die beiden Behälter sind dabei in einem umgebenden Mantelbehälter gehalten.

Eine andere Sorte von Flüssigkeitsbehältern betrifft Wasserkocher mit einer integrierten Heizvorrichtung sowie Kaffeekannen zur Auflage auf Warmhalteplatten. Bei diesen Flüssigkeitsbehältern ist der Boden im Gegensatz zu den oben genannten

Isolationsbehältern üblicherweise derart ausgestaltet, dass er für das Erwärmen eine möglichst gute Wärmeleitung der Wärmeenergie zur Flüssigkeit erlaubt. Der Boden ist bei diesen Flüssigkeitsbehältern deshalb bevorzugt einwandig ausgebildet.

Auch diese Flüssigkeitsbehälter weisen oft eine doppelwandige Seitenwand auf. Der Grund hierfür ist, dass für die Innenwand bevorzugt ein Material wie zum Beispiel Glas oder Edelstahl gewählt wird, welches vorteilhafte Eigenschaften für den Kontakt mit Lebensmitteln aufweist, welches sich jedoch nicht für die Herstellung der äusseren Struktur des Flüssigkeitsbehälters eignet. Beispielsweise eignet sich insbesondere Glas optimal für den Kontakt mit Lebensmitteln, da es geruchsneutral und einfach zu reinigen ist. Allerdings ist Glas, wie bereits erwähnt, bruchempfindlich und im Vergleich zu Kunststoff schlechter formbar. Aus diesem Grund wird die Innenwand, wie beispielsweise bei dem in der EP 0 175 231 gezeigten Wasserkocher, oft in einer äusseren, ummantelnden Struktur gehalten.

Ein weiterer Wasserkocher, bei welchen ein Innenbehälter in einer umgebenden Struktur gehalten und gleichzeitig durch diese geschützt ist, ist in der CN 200973622 offenbart.

Ein besonderes einfach konstruierter Flüssigkeitsbehälter mit einem einwandigen Boden, bei welchem eine Innenwand in einer Ummantelung gehalten ist, ist in der CN 201016037 gezeigt. Beim Flüssigkeitsbehälter handelt es sich um einen Isolationsbehälter. Die Innenwand wird dabei mittels eines auf die Ummantelung aufschraubbaren Unterteils gegen ein oberes, an der Ummantelung angebrachtes Dichtungselement gepresst und ist dadurch in der Ummantelung fixiert.

Die äussere Struktur nimmt bei diesen doppelwandigen Flüssigkeitsbehältern mit einwandigem Boden in Bezug auf den Innenbehälter also einerseits eine Ummantelungsfunktion zu Schutz- oder Isolationszwecken und andererseits eine Haltefunktion wahr. Dadurch, dass die äussere Struktur diese zwei Funktionen gleichzeitig erfüllen muss, ergeben sich jedoch widerstreitende Anforderungen an deren Ausgestaltung, insbesondere in Bezug auf die Materialwahl. Ein Material, welches zum Beispiel zwar gute Schutz- oder Isolationseigenschaften aufweist, welches jedoch nur schlecht formbar und verhältnismässig spröde ist und deshalb nicht zur Wahrnehmung einer Haltefunktion geeignet ist, kann deshalb für die äussere Struktur nicht eingesetzt werden.

### DARSTELLUNG DER ERFINDUNG

Es ist also eine Aufgabe der vorliegenden Erfindung, einen doppelwandigen Flüssigkeitsbehälter mit beliebig ausgestaltetem Boden anzugeben, bei welchem die Funktionen für das Halten und Ummanteln der inneren Seitenwand einzeln optimierbar sind. Zur Lösung dieser Aufgabe wird ein Flüssigkeitsbehälter vorgeschlagen, wie er in Anspruch 1 angegeben ist. Vorteilhafte Ausgestaltungen der Erfindung sind in den abhängigen Ansprüchen angegeben.

Im Folgenden beziehen sich Richtungs- und Ortsangaben wie nach oben, nach unten, oberhalb, unterhalb, oben, unten etc. jeweils auf einen bestimmungsgemäss zusammengebauten Flüssigkeitsbehälter, der auf einer bezüglich der Schwerkraftsrichtung horizontalen Oberfläche aufrecht steht. Falls der Flüssigkeitsbehälter einen Ausgiesser aufweist, ist dieser oben angeordnet, währenddem sich der Boden des Flüssigkeitsbehälters unten befindet. Angaben wie innen, nach innen, aussen und nach aussen sind jeweils in Bezug auf den Innenraum des Flüssigkeitsbehälters zu verstehen.

Die vorliegende Erfindung stellt also einen doppelwandigen Flüssigkeitsbehälter mit den folgenden Merkmalen zu Verfügung:
eine innere Seitenwand, welche eine Oberkante aufweist und einen Innenraum begrenzt, der zur Aufnahme einer Flüssigkeit dient;
eine ausserhalb der inneren Seitenwand angeordnete äussere Seitenwand, welche eine Oberkante und eine Unterkante aufweist;
eine Haltestruktur mit einem inneren Halteelement, in welchem die Oberkante der inneren Seitenwand gehalten ist, und einem äusseren Halteelement, in welchem die Oberkante der äusseren Seitenwand gehalten ist; sowie
ein an der Haltestruktur angebrachtes Fixierelement, welches die Unterkante der äusseren Seitenwand in Bezug auf die Haltestruktur fixiert.

Mit Hilfe des Fixierelements wird somit die äussere und bevorzugt auch die innere Seitenwand in der Haltestruktur fixiert. Indem zwei Seitenwände vorgesehen sind, die mit Hilfe eines Fixierelements in einer Haltestruktur gehalten sind, wird ein einfach herstellbarer, doppelwandiger Flüssigkeitsbehälter mit einem beliebig ausgestalteten Boden bereitgestellt, bei welchem die Funktionen des Haltens und der Ummantelung der inneren Seitenwand strukturell getrennt sind. Während die äussere Seitenwand die Funktion der Ummantelung wahrnimmt, dient die Haltestruktur insbesondere zum Halten der inneren Seitenwand. Die äussere Seitenwand und die Haltestruktur können aus unterschiedlichen, für die jeweilige Funktion am besten geeigneten Materialien hergestellt sein. Zudem kann insbesondere die von aussen her üblicherweise am besten sichtbare Haltestruktur auch auf eine nahezu beliebige Art und Weise ausgestaltet sein und insbesondere auch Öffnungen, Fenster etc. aufweisen. Auch wenn die Haltestruktur keine geschlossene Ummantelung um die innere und äussere Seitenwand herum bildet, ist die innere Seitenwand dennoch durch die äussere Seitenwand vor äusseren Einflüssen geschützt.

Durch die Form der inneren Seitenwand ist eine Längsrichtung des Flüssigkeitsbehälters definiert. Bevorzugt ist die innere Seitenwand und insbesondere bevorzugt auch die äussere Seitenwand im Wesentlichen zylindrisch ausgebildet, wodurch auch eine radiale Richtung des Flüssigkeitsbehälters definiert ist.

Die Haltestruktur erstreckt sich üblicherweise entlang der Längsrichtung des Flüssigkeitsbehälters sowohl nach unten als auch nach oben hin über die innere und äussere Seitenwand hinaus. Das Fixierelement ist dann vorteilhaft unterhalb der inneren und äusseren Seitenwand derart an der Haltestruktur angebracht, dass die innere und äussere Seitenwand in Längsrichtung in ihrer Lage relativ zur Haltestruktur fixiert sind und dadurch fest im inneren bzw. äusseren Halteelement der Haltestruktur gehalten sind. Dabei kann die äussere Seitenwand insbesondere auch zwischen dem äusseren Halteelement der Haltestruktur und dem Fixierelement eingeklemmt sein. Genauso kann die innere Seitenwand zwischen dem inneren Halteelement der Haltestruktur und dem Fixierelement eingeklemmt sein. Das Fixierelement kann also insbesondere einen gewissen Anpressdruck auf die Unterkante der äusseren Seitenwand bzw. der äusseren Seitenwand ausüben.

Bevorzugt sind die innere Seitenwand und die äussere Seitenwand jeweils transparent, und die Haltestruktur ist vorzugsweise derart ausgebildet, dass der Innenraum durch die innere Seitenwand und die äussere Seitenwand hindurch von aussen her einsehbar ist. Die Haltestruktur weist vorteilhaft einen oberen Basisring, an dem das innere und das äussere Halteelement angeordnet sind, und einen unteren Basisring auf, an dem das Fixierelement angebracht werden kann, wobei die beiden Basisringe mittels Streben miteinander verbunden sind. Zwischen den Basisringen und den Streben sind dann Fensteröffnungen vorhanden, durch welche hindurch der Innenraum des Flüssigkeitsbehälters einsehbar ist. An der Haltestruktur kann auch ein Handgriff angebracht sein, welcher sich insbesondere vom oberen Basisring zum unteren Basisring erstrecken kann.

Bevorzugt sind die innere Seitenwand aus Glas und die äussere Seitenwand aus einem Kunststoff wie Polycarbonat (PC) hergestellt. Möglich wäre es aber auch, die innere Seitenwand aus einem Kunststoff, wie zum Beispiel Polycarbonat, herzustellen. Umgekehrt wäre es auch denkbar, die äussere Seitenwand aus Glas herzustellen. Glas ist insbesondere für den direkten Kontakt mit Lebensmitteln sehr gut geeignet. Die Herstellung der äusseren Seitenwand aus einem Kunststoff wie Polycarbonat ist deshalb sehr vorteilhaft, weil dieses Material im Vergleich zu Glas beständiger, robuster und bruchsicherer ist. Während es sich bei Polycarbonat um ein verhältnismässig hartes und robustes Material handelt, welches deshalb gut für die Ummantelungsfunktion der äusseren Seitenwand geeignet ist, kann die Haltestruktur des erfindungsgemässen Flüssigkeitsbehälters aus einem anderen Kunststoff bestehen, der im Vergleich zu Polycarbonat einfacher formbar ist und eine höhere Elastizität aufweist und somit besser zur Wahrnehmung der Haltefunktion geeignet ist.

Grundsätzlich wäre es denkbar, dass die innere Seitenwand nach unten hin geschlossen ausgebildet ist und dadurch einen Boden bildet, welcher den Innenraum nach unten hin begrenzt. In einer bevorzugten Ausführungsform weisen jedoch die innere Seitenwand und die äussere Seitenwand jeweils im Wesentlichen die Form eines sowohl nach oben als auch nach unten hin offenen Zylinders auf. Die innere und äussere Seitenwand sind dadurch besonders einfach herstellbar.

Bevorzugt ist das innere Halteelement als eine Nut ausgestaltet, welche insbesondere umlaufend sein kann. Die Oberkante der inneren Seitenwand ist dann in dieser inneren Nut aufgenommen. Bevorzugt ist auch das äussere Halteelement als eine Nut ausgestaltet, die insbesondere umlaufend ist, wobei dann die Oberkante der äusseren Seitenwand in dieser äusseren Nut aufgenommen ist.

Der Boden des Innenraums könnte zum Beispiel durch das Fixierelement gebildet sein. Vorzugsweise weist der Flüssigkeitsbehälter aber ein auf dem Fixierelement aufliegendes Bodenelement auf, welches zusammen mit der inneren Seitenwand den Innenraum des Flüssigkeitsbehälters begrenzt. Das Bodenelement ist dabei bevorzugt zwischen dem Fixierelement und einer Unterkante der inneren Seitenwand angeordnet, insbesondere eingeklemmt. Die innere Seitenwand ist dann zwischen dem inneren Halteelement der Haltestruktur und dem Bodenelement angeordnet und liegt insbesondere auf dem Bodenelement auf.

In einer insbesondere bevorzugten Ausführungsform handelt es sich beim Flüssigkeitsbehälter um einen Wasserkocher mit einer Heizvorrichtung. Dabei bildet das Bodenelement bevorzugt eine Heizplatte, welche mit der Heizvorrichtung verbunden ist. Das Bodenelement ist dann üblicherweise aus einem gut wärmeleitenden Material, bevorzugt einem Metall, hergestellt und kann insbesondere eine an der Unterseite angebrachte Heizspirale aufweisen. Es kann sich aber auch zum Beispiel um ein Dünnschichtheizelement handeln.

Vorzugsweise weist das Bodenelement eine innere Nut auf, in welche sich die innere Seitenwand hinein erstreckt. Dadurch ist einerseits die innere Seitenwand zwischen dem inneren Halteelement der Haltestruktur und dem Bodenelement fixiert und andererseits das Bodenelement zwischen der inneren Seitenwand und dem Fixierelement fixiert. Ausserdem sind das Bodenelement und die innere Seitenwand jeweils auch in radialer Richtung fixiert. Die innere Nut des Bodenelements ist vorteilhaft umlaufend ausgebildet.

Bevorzugt ist im inneren Halteelement der Haltestruktur und/oder in der inneren Nut des Bodenelements eine Dichtungsmasse vorgesehen, welche die innere Seitenwand gegenüber der Haltestruktur bzw. gegenüber dem Bodenelement flüssigkeitsdicht abdichtet. Bei dieser Dichtungsmasse kann es sich insbesondere um einen Klebstoff, wie zum Beispiel Loctite™, handeln.

Vorteilhaft ist zwischen der inneren Seitenwand und dem Fixierelement zumindest ein Auflageelement angeordnet, welches im Vergleich zur inneren Seitenwand und zum Fixierelement aus einem wesentlich flexibleren Material hergestellt ist, so dass es zur Kompensation von Fertigungstoleranzen bezüglich der Dimensionierung der Länge der inneren Seitenwand geeignet ist. Das Auflageelement, welches insbesondere aus Silikon hergestellt sein kann, ist dabei bevorzugt am Fixierelement angebracht. Bevorzugt ist das Auflageelement dabei als ein Auflagepfropfen ausgebildet, welcher sich in Längsrichtung des Flüssigkeitsbehälters durch eine am Fixierelement ausgebildete Öffnung hindurch erstreckt und eine zur Unterkante der inneren Seitenwand hingewandte Auflagefläche aufweist. Falls ein Bodenelement zwischen dem inneren Halteelement der Haltestruktur und dem Fixierelement angeordnet ist, liegt dieses Bodenelement vorzugsweise auf dem zumindest einen Auflageelement auf.

Vorteilhaft begrenzen das Fixierelement und die Haltestruktur gemeinsam eine äussere Nut, in welche sich die äussere Seitenwand hinein erstreckt. Die äussere Seitenwand ist dadurch auch in die radiale Richtung fixiert. Bevorzugt weist diese durch das Fixierelement und die Haltestruktur gemeinsam begrenzte äussere Nut eine am Fixierelement ausgebildete, seitliche Innenfläche auf, welche relativ zur Längsrichtung des Flüssigkeitsbehälters geneigt ist, so dass die äussere Seitenwand vom Fixierelement radial nach aussen hin gedrückt wird.

In einer bevorzugten Ausführungsform ist das Fixierelement als ein Fixierring ausgebildet. Dieser weist vorteilhaft einen Aussendurchmesser auf, welcher im Wesentlichen demjenigen der äusseren Seitenwand entspricht. Insbesondere bevorzugt weist der Fixierring eine Aussenseite auf, die insbesondere umlaufend an der Innenseite der Haltestruktur anliegt. Auf der Innenseite des Fixierrings sind bevorzugt eine oder mehrere Strukturen angebracht, welche, falls der Flüssigkeitsbehälter Auflageelemente aufweist, Öffnungen zur Aufnahme dieser Auflageelemente aufweisen.

Vorteilhaft ist die Haltestruktur nach unten hin offen ausgebildet, wobei das Fixierelement bei der Herstellung des Flüssigkeitsbehälters von unten her in die Haltestruktur einführbar ist. Dies erlaubt eine besonders einfache Herstellung des Flüssigkeitsbehälters, indem zuerst die innere und äussere Seitenwand in die Haltestruktur eingeführt und anschliessend von unten her mit dem Fixierelement fixiert werden.

Falls die Haltestruktur nach unten hin offen ausgebildet ist, weist der Flüssigkeitsbehälter bevorzugt eine untere Abschlussplatte zum Verschliessen der Haltestruktur nach unten hin auf. Grundsätzlich könnte das Fixierelement diese Abschlussplatte bilden. Vorteilhaft ist aber eine separate Abschlussplatte vorhanden, welche bevorzugt am Fixierelement befestigt ist. Insbesondere bevorzugt ist die Abschlussplatte mittels Schrauben am Fixierelement befestigt. Falls das Fixierelement als Fixierring mit auf der Innenseite angebrachten Strukturen ausgestaltet ist, können zum Beispiel an diesen Strukturen, bei welchen es sich dann um Befestigungsstrukturen handelt, Hülsen mit jeweils einem Innengewinde vorgesehen sein. Falls es sich beim Flüssigkeitsbehälter um einen Wasserkocher handelt, kann in der Abschlussplatte insbesondere ein Steckanschluss vorgesehen sein, um den Flüssigkeitsbehälter auf einfache Art und Weise an eine mit dem elektrischen Netz verbundene Anschlussbasis anschliessen zu können. Der Flüssigkeitsbehälter weist dann eine interne elektrische Verbindung auf, welche den Steckanschluss der Abschlussplatte mit der Heizvorrichtung verbindet.

Vorzugsweise weist das Fixierelement zumindest eine erste Raststruktur und die Haltestruktur zumindest eine zweite Raststruktur auf, welche derart komplementär zueinander ausgebildet sind, dass das Fixierelement in die Haltestruktur einrastbar ist. Dies ermöglicht eine besonders einfache Montage des Fixierelements an der Haltestruktur. Die Raststrukturen können dabei derart ausgebildet sein, dass das Fixierelement nach erstmaliger Befestigung an der Haltestruktur nur mittels Zerstörung wieder von der Haltestruktur entfernbar ist. Bei den Raststrukturen kann es sich insbesondere um Rastkerben und Rastnasen handeln.

Der Flüssigkeitsbehälter kann einen Deckel aufweisen, um den Innenraum nach aussen hin zu verschliessen. Der Deckel kann insbesondere schwenkbar an der Haltestruktur angebracht sein.

Ausserdem kann die Haltestruktur einen Ausgiesser aufweisen, um die Flüssigkeit aus dem Innenraum auszuschenken. Bevorzugt ist dieser Ausgiesser im Bereich einer Oberkante der Haltestruktur ausgebildet.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines doppelwandigen Flüssigkeitsbehälters gemäss einer ersten erfindungsgemässen Ausführungsform;
- Fig. 2: eine zentrale Schnittansicht in der Ebene II-II durch den Flüssigkeitsbehälter der Fig. 1;
- Fig. 3: eine vergrösserte Darstellung des in der Figur 2 gestrichelt gekennzeichneten Bereichs;
- Fig. 4: eine zentrale Schnittansicht in der Ebene II-II durch den Flüssigkeitsbehälter der Fig. 1, ohne Anschlussbasis, Abschlussplatte und Fixierring;
- Fig. 5: eine zentrale Schnittansicht in der Ebene IV-IV durch den Flüssigkeitsbehälter der Fig. 1;
- Fig. 6: eine vergrösserte Darstellung des in der Figur 5 gestrichelt gekennzeichneten Bereichs;
- Fig. 7: eine perspektivische Ansicht von schräg unten des Fixierrings des in der Figur 1 gezeigten Flüssigkeitsbehälters;
- Fig. 8: eine zentrale Schnittansicht durch einen doppelwandigen Flüssigkeitsbehälter gemäss einer zweiten erfindungsgemässen Ausführungsform; sowie
- Fig. 9: eine vergrösserte Darstellung des in der Figur 8 gestrichelt gekennzeichneten Bereichs.

### BESCHREIBUNG BEVORZUGTER AUSFÜHRUNGSFORMEN

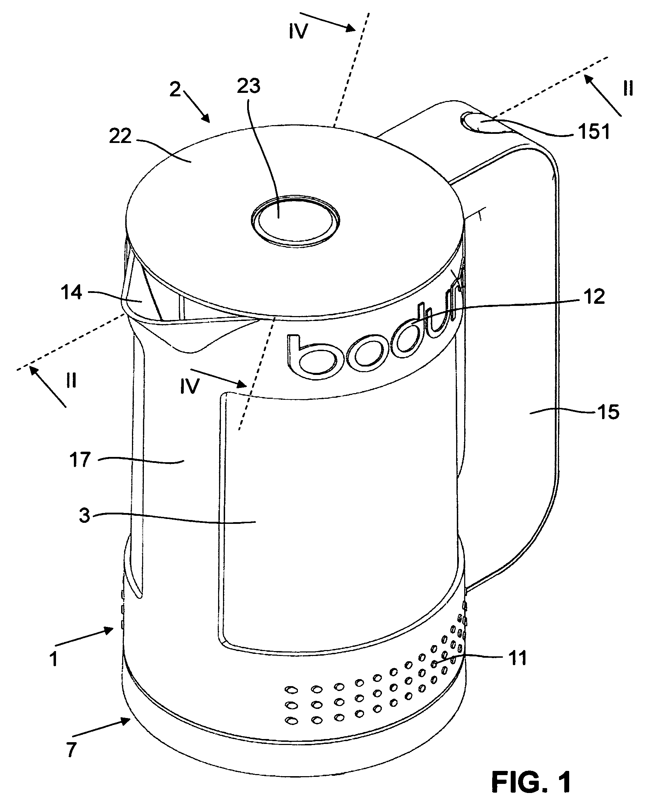

In den Figuren 1 bis 7 ist eine erste erfindungsgemässe Ausführungsform eines doppelwandigen Flüssigkeitsbehälters gezeigt, welcher hier als Wasserkocher ausgebildet ist. Der Flüssigkeitsbehälter weist eine Haltestruktur 1, eine äussere Seitenwand 3, eine innere Seitenwand 4 sowie einen Fixierring 6 auf, welcher zur Befestigung der beiden Seitenwände 3 und 4 an der Haltestruktur 1 dient. Dabei sind die beiden konzentrisch angeordneten Seitenwände 3 und 4 durch den Fixierring 6 in oberen Nuten 161 und 162 fixiert, welche an der Haltestruktur 1 ausgebildet sind und somit Halteelemente bilden. Die innere Seitenwand 4 begrenzt gemeinsam mit einer Heizplatte 5 einen Innenraum 9 des Wasserkochers, welcher zur Aufnahme einer Flüssigkeit bzw. hier Wasser dient.

Die Haltestruktur 1 des Wasserkochers ist insbesondere in der Figur 1 gut erkennbar. Im vorliegenden Ausführungsbeispiel weist die Haltestruktur einen unteren Basisring 11 und einen oberen Basisring 12 auf, welche über Verbindungsstege 17 miteinander verbunden sind. Zwischen den Basisringen 11 und 12 und den Verbindungsstegen 17 sind Fensteröffnungen ausgebildet. Diese können beliebig ausgestaltet sein, weisen hier jedoch eine jeweils rechteckige Form auf. Die Haltestruktur 1 weist einen Ausgiesser 14 zum Ausschenken der Flüssigkeit auf, welcher hier an der Oberkante des oberen Basisringes 12 angeordnet ist. Ausserdem ist an der Haltestruktur 1 ein Handgriff 15 angebracht, an dem ein Druckknopf 151 zum Ein-/Ausschalten des Wasserkochers sowie eine Statusanzeige 152 zum Anzeigen des Betriebsstatus des Wasserkochers angeordnet sein können.

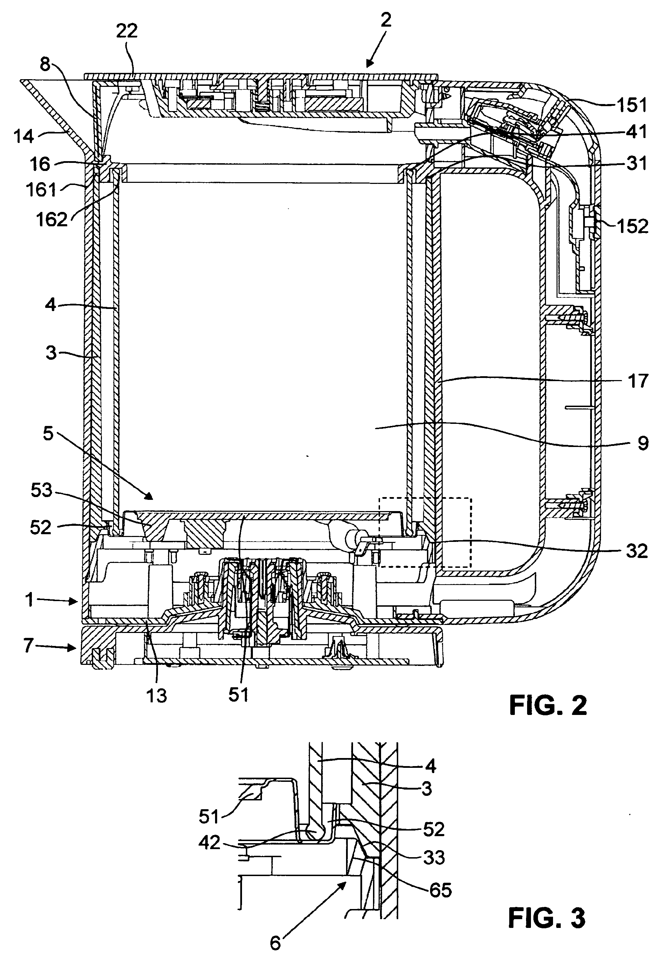

Die Haltestruktur 1 ist, wie es in der Figur 2 gezeigt ist, nach oben und nach unten hin jeweils offen ausgebildet. Eine derartige Ausgestaltung erlaubt es, die Seitenwände 3 und 4 bei der Herstellung des Flüssigkeitsbehälters zum Beispiel von unten her in die Haltestruktur 1 einzuführen. Ebenso können die Heizplatte 5 und der Fixierring 6 bei der Herstellung in die Haltestruktur 1 eingeführt werden, bevor diese nach unten hin von einer Abschlussplatte 13 verschlossen wird. Wie üblicherweise bei Wasserkochern vorgesehen, weist die Abschlussplatte 13 einen zentralen Steckanschluss auf, um für das Aufwärmen des Wassers eine elektrische Verbindung mit einer ans elektrische Netz anschliessbaren Anschlussbasis 7 herstellen zu können. Derartige Steckanschlüsse sind im Stand der Technik hinlänglich bekannt.

Die Haltestruktur 1 weist insbesondere eine Befestigungsstruktur 16 auf, welche unmittelbar unterhalb des Ausgiessers 14 am oberen Basisring 12 angeordnet ist und radial in das Innere der Haltestruktur 1 hineinragt. An der Befestigungsstruktur 16 ist die nach unten hin offene, innere Nut 162 ausgebildet, welche zur Aufnahme der Oberkante 41 der inneren Seitenwand 4 dient. Die innere Nut 162 ist dabei umlaufend ausgebildet. Zudem bildet die Befestigungsstruktur 16 gemeinsam mit der Innenfläche des oberen Basisrings 12 eine ebenfalls nach unten hin offene, äussere Nut 161, welche hier ebenfalls umlaufend ausgebildet ist, und welche zur Aufnahme der Oberkante 31 der äusseren Seitenwand 3 dient.

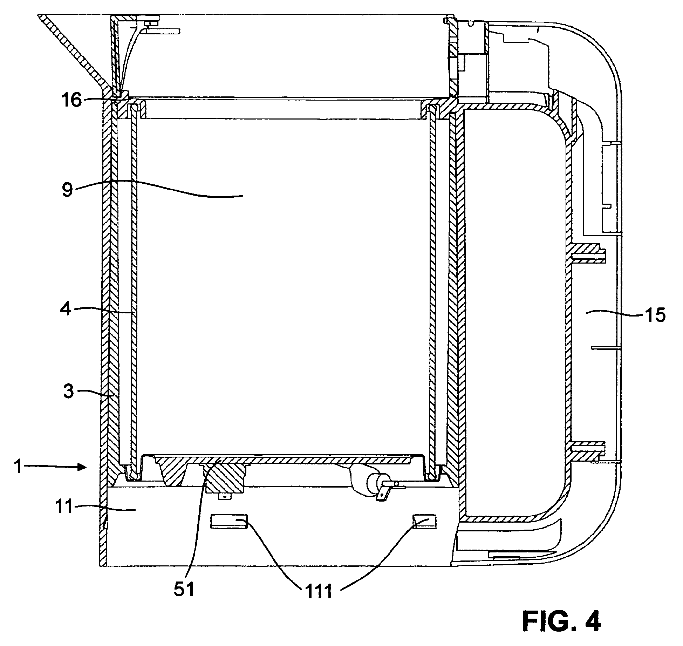

Aus der Figur 4 ist ersichtlich, dass der untere Basisring 11 der Haltestruktur 1 auf seiner Innenseite Rastkerben 111 aufweist. Bei dem in den Figuren 1 bis 7 gezeigten Wasserkocher sind fünf Rastkerben 111 vorhanden. Selbstverständlich können auch mehr oder weniger als fünf Rastkerben 111 vorgesehen sein. Die Rastkerben 111 dienen zum Befestigen des Fixierrings 6 an der Haltestruktur 1.

An der Haltestruktur 1 ist ein schwenkbarer Deckel 2 angebracht, welcher eine Deckfläche 22 zum Verschliessen des Innenraums 9 aufweist. Am Deckel 2 ist ein Druckknopf 23 vorgesehen. Der Deckel 2 ist derart über eine Feder mit der Haltestruktur 1 verbunden, dass er bei Betätigung des Druckknopfes 23 automatisch nach oben schwenkt. Im Bereich des Ausgiessers 14 ist ein Siebeinsatz 8 vorgesehen, welcher feste Bestandteile wie beispielsweise abgelöste Kalkablagerungen beim Ausschenken der Flüssigkeit zurückhält.

Die Haltestruktur 1 wird bevorzugt im Spritzgussverfahren einstückig aus einem Kunststoff hergestellt.

Die in den Figuren 2 bis 6 erkennbare äussere Seitenwand 3 ist im Wesentlichen hohlzylindrisch ausgestaltet und nach oben sowie nach unten hin jeweils offen ausgebildet. Die Seitenwand 3 weist im vorliegenden Ausführungsbeispiel, wie es aus der Figur 3 ersichtlich ist, in ihrem unteren Endbereich eine umlaufende, abgeschrägte Innenfläche 33 auf, welche mit einer Verjüngung der Wandstärke der äusseren Seitenwand 3 nach unten zur Unterkante 32 hin einhergeht. Unmittelbar oberhalb dieser abgeschrägten Innenfläche 33 ist ein umlaufender, radial nach innen ragender Absatz ausgebildet, welcher zum Zentrieren der Heizplatte 5 dient.

Damit der Innenraum 9 für den Benutzer von aussen her einsehbar ist, ist die äussere Seitenwand 3 bevorzugt aus einem transparenten Material hergestellt. Um die Bruchsicherheit zu erhöhen, handelt es sich dabei vorzugsweise um einen Kunststoff, wie insbesondere Polycarbonat (PC).

Die in den Figuren 2 bis 6 erkennbare innere Seitenwand 4 ist im Wesentlichen hohlzylindrisch ausgestaltet und sowohl nach oben als auch nach unten hin offen ausgebildet. Sie weist eine Oberkante 41 sowie eine Unterkante 42 auf, welche beide jeweils einen umlaufenden Wulst bilden.

Die innere Seitenwand 4 ist bevorzugt transparent ausgebildet. Dadurch ist der Innenraum 9 von aussen her einsehbar. Da die innere Seitenwand 4 mit dem im Innenraum 9 aufgenommenen Wasser in Kontakt kommt, ist sie insbesondere bevorzugt aus Glas hergestellt. Sie könnte alternativ aber beispielsweise auch aus Edelstahl hergestellt sein.

Die Heizplatte 5, welche eine Bodenfläche 51 aufweist, bildet in Bezug auf den Innenraum 9 ein Bodenelement. Auf der Unterseite der Heizplatte 5 ist eine Heizspirale 53 angebracht, welche zum Erwärmen der im Innenraum 9 aufgenommenen Flüssigkeit dient. Die Bodenfläche 51 ist von einer umlaufenden, nach oben hin offenen Nut 52 umgeben. Die Nut 52 dient zur Aufnahme der Unterkante 42 der inneren Seitenwand 4. Im vorliegenden Ausführungsbeispiel ist die Nut 52 geringfügig versetzt unterhalb der Bodenfläche 51 angeordnet.

Die Heizplatte 5 ist üblicherweise aus einem gut wärmeleitenden Material, wie insbesondere einem Metall hergestellt.

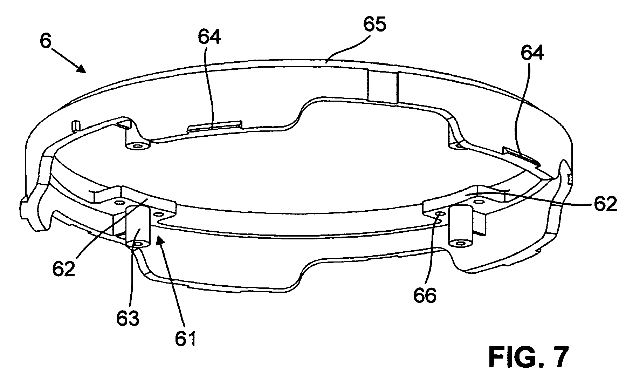

Die Ausgestaltung des Fixierrings 6 ist insbesondere aus der Figur 7 gut ersichtlich. Der Fixierring 6 weist eine ringförmige Gestalt auf und ist dabei derart dimensioniert, dass er mit seiner Aussenfläche, wie es in der Figur 2 gezeigt ist, an der Innenfläche des unteren Basisrings 11 der Haltestruktur 1 anliegt. Um den Fixierring 6 in dieser Position an der Haltestruktur 1 zu befestigen, weist der Fixierring auf seiner Aussenseite Rastnasen 64 auf, welche bezüglich ihrer Anzahl, Anordnung und Ausgestaltung komplementär zu den Rastkerben 111 der Haltestruktur 1 ausgebildet sind. Der Fixierring 6 ist dadurch dazu ausgebildet, eine Rastverbindung mit der Haltestruktur 1 eingehen. Die Rastnasen 64 weisen hier jeweils eine Unterseite auf, welche sich in die radiale Richtung senkrecht zur angrenzenden Innenwand des Basisrings 11 erstreckt. Die Oberseite der Rastnasen 64 ist hingegen relativ zur Längsrichtung und zur radialen Richtung geneigt ausgebildet, so dass der Fixierring 6 beim Einführen in die Haltestruktur 1 einfach einrastet. Bevorzugt ist diese Rastverbindung nach dem erstmaligen Einrasten nur mittels Zerstörung wieder trennbar. Das Innenleben des Wasserkochers zwischen Heizplatte 5 und Abschlussplatte 13 kann dadurch für den Benutzer unzugänglich gemacht werden.

In den Bereichen der Rastnasen 64 erstreckt sich der Fixierring 6 jeweils geringfügig weiter nach unten hin als in den dazwischenliegenden Bereichen. Während die Oberkante des Fixierrings 6 in einer einzigen Ebene verläuft, beschreibt die Unterkante dadurch eine wellenartige Form.

Nach oben hin weist der Fixierring 6 ein umlaufendes Anpresselement 65 auf, welches insbesondere in den Figuren 2 und 3 im Querschnitt gut erkennbar ist. Das Anpresselement 65 ist im Bereich der Oberkante des Fixierrings 6 an dessen Innenwand angebracht und erstreckt sich von dort aus über die Oberkante hinaus nach oben hin. Die sich von der Oberkante des Fixierrings aus erstreckende Aussenfläche des Anpresselements 65 weist im Querschnitt eine derartige Neigung auf, dass sie sich nach oben hin von der Innenwand des unteren Basisrings 11 der Haltestruktur 1 entfernt. Das Anpresselement 65 des Fixierrings 6 bildet somit gemeinsam mit der Innenwand des unteren Basisrings 11 eine untere Nut, die eine komplementäre Ausgestaltung im Vergleich zum unteren Endbereich der äusseren Seitenwand 3 aufweist. Diese untere Nut dient somit zur Aufnahme der Unterkante 32 der äusseren Seitenwand 3. Die Schrägflächen des Anpresselements 65 und des unteren Endbereichs der äusseren Seitenwand 3 bewirken dabei, dass die äussere Seitenwand sowohl nach oben als auch radial nach aussen hin gedrückt wird. Die Oberkante des Fixierrings 6 dient zur Auflage der Unterkante 32 der äusseren Seitenwand 3.

Auf der Innenseite des Fixierrings 6 sind in regelmässigen Abständen nach innen vorragende Befestigungsstrukturen 61 angebracht. Im vorliegenden Ausführungsbeispiel sind vier Befestigungsstrukturen 61 vorgesehen, es können aber natürlich auch mehr oder weniger vorhanden sein. Die Befestigungsstrukturen 61 weisen jeweils eine sich senkrecht zur Innenfläche des Fixierrings 6 nach innen hin erstreckende Verbindungsplatte 62 auf, an deren Unterseite eine sich nach unten hin erstreckende Hülse 63 mit einem Innengewinde angebracht ist. Die Hülse 63 kann über eine radial verlaufende Verstärkungsstrebe mit der Innenfläche des Fixierrings 6 verbunden sein. Die Hülsen 63 dienen dazu, den Fixierring 6 mittels Schrauben mit der Abschlussplatte 13 zu verbinden. Bevorzugt ist der Fixierring 6 einstückig im Spritzgussverfahren aus einem Kunststoff hergestellt.

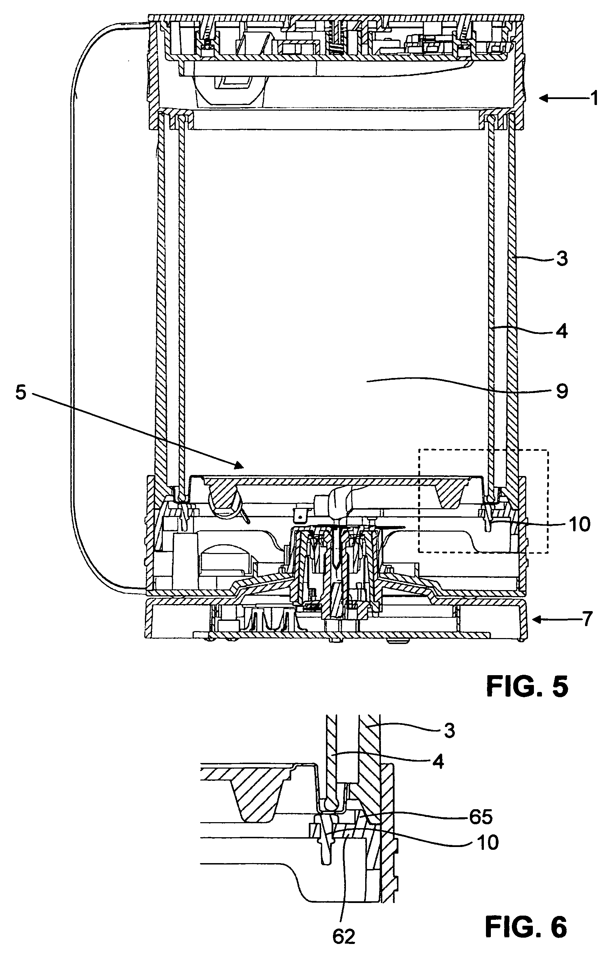

In der Verbindungsplatte 62 der Befestigungsstrukturen 61 sind jeweils zwei Öffnungen 66 ausgebildet, welche in Umfangsrichtung jeweils vor und hinter der Hülse 63 angeordnet sind. Die Öffnungen 66 dienen zur Aufnahme von Auflagepfropfen 10. Diese Auflagepfropfen 10 sind im Vergleich zum Fixierring 6 aus einem flexiblen Material hergestellt. Bevorzugt handelt es sich dabei um Silikon. Die Auflagepfropfen 10 dienen, wie es in den Figuren 5 und 6 ersichtlich ist, zur Auflage der Heizplatte 5. Selbstverständlich wäre es auch möglich, dass die innere Seitenwand 4 in einer alternativen Ausführungsform mit Ihrer Unterkante 42 direkt auf den Auflagepfropfen 10 aufliegen würde. Die Auflagepfropfen 10 dienen dabei dank ihrer flexiblen Ausgestaltung insbesondere dazu, gewisse Fertigungstoleranzen hinsichtlich der Dimensionierung der inneren Seitenwand 4 auszugleichen, damit der Fixierring 6 dennoch einen gewissen Anpressdruck auf die Unterkante 42 der inneren Seitenwand 4 ausübt.

Bei der Herstellung des Flüssigkeitsbehälters werden die innere Seitenwand 4 und die äussere Seitenwand 3 in die innere Nut 162 bzw. die äussere Nut 161 der Haltestruktur 1 eingesetzt. Die Heizplatte 5 wird dann von unten her derart in die Haltestruktur 1 eingeführt, dass die umlaufende Nut 52 der Heizplatte 5 die Unterkante 42 der inneren Seitenwand 4 aufnimmt. Anschliessend wird der Fixierring 6 mit seinen Rastnasen 64 in die Rastkerben 111 eingerastet bzw. eingeschnappt. Die äussere Seitenwand 3 und die innere Seitenwand 4 sind dadurch zwischen der Befestigungsstruktur 16 der Haltestruktur 1 und dem Fixierring 6 fixiert. Zusätzlich ist bei diesem Ausführungsbeispiel auch die Heizplatte 5 zwischen dem Fixierring 6 und der Befestigungsstruktur 16 bzw. der inneren Seitenwand 4 fixiert. Schliesslich wird die Haltestruktur 1 mittels der Abschlussplatte 13 nach unten hin verschlossen, indem die Abschlussplatte 13 an den Fixierring 6 angeschraubt wird. Alternativ wäre es auch möglich, die Abschlussplatte 13 bereits vor dem Einsetzen des Fixierrings 6 in die Haltestruktur an den Fixierring 6 anzuschrauben oder auf eine andere Art und Weise mit diesem zu verbinden, zum Beispiel durch Verkleben, Verschweissen etc.

In der inneren Nut 162 der Haltestruktur 1 und in der Nut 52 der Heizplatte 5 sind bevorzugt Dichtungsmassen vorgesehen, welche die innere Seitenwand 4 flüssigkeitsdicht gegenüber der Haltestruktur 1 bzw. der Heizplatte 5 abdichten. Bei diesen Dichtungsmassen handelt es sich bevorzugt um einen Klebstoff, wie zum Beispiel Loctite™. Ebenso kann in der äusseren Nut 161 der Haltestruktur 1 und in der durch den Fixierring 6 und die Haltestruktur 1 gemeinsam gebildeten unteren Nut jeweils eine Dichtungsmasse, bevorzugt in Form eines Klebstoffs, wie beispielsweise Loctite™, vorgesehen sein.

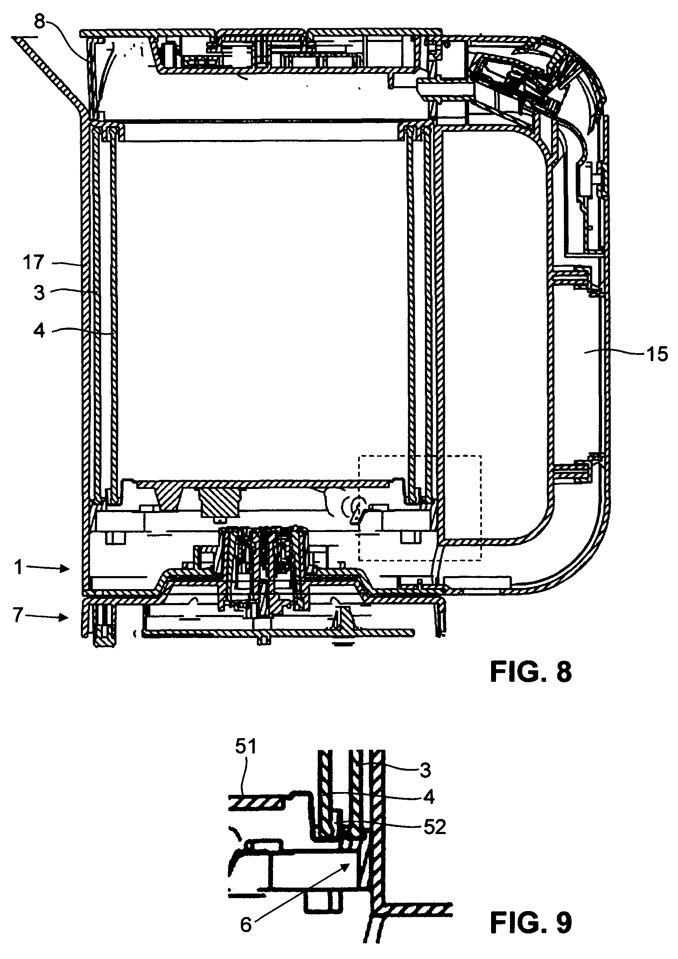

In den Figuren 8 und 9 ist eine weitere Ausführungsform eines erfindungsgemässen Flüssigkeitsbehälters gezeigt. Im Gegensatz zu der in den Figuren 1 bis 7 gezeigten Ausführungsform bildet hier der Fixierring 6 alleine und nicht gemeinsam mit der Innenfläche der Haltestruktur 1 die untere Nut für die Unterkante 32 der äusseren Seitenwand 3. Die äussere Seitenwand 3 weist zudem ebenso wie die innere Seitenwand 4 im Bereich ihrer Oberkante 31 und Unterkante 32 jeweils einen umlaufenden Wulst auf.

Die Erfindung ist selbstverständlich nicht auf die vorstehenden Ausführungsbeispiele beschränkt, und eine Vielzahl von Abwandlungen ist möglich. So muss beispielsweise die Heizplatte nicht zwingend zwischen der inneren Seitenwand 4 und dem Fixierring 6 fixiert sein, sondern könnte auch auf eine beliebige andere Art und Weise an der Haltestruktur oder an der inneren Seitenwand angebracht sein. Der Flüssigkeitsbehälter muss nicht zwingend als ein Wasserkocher ausgebildet sein. Die inneren und äusseren Seitenwände könnten mit ihren Unterkanten jeweils auch auf der Abschlussplatte aufliegen, welche dann das Fixierelement bilden würde. Die Rollen der Rastkerben und Rastnasen an der Haltestruktur bzw. am Fixierelement können selbstverständlich auch vertauscht sein. Eine Vielzahl weiterer Abwandlungen ist möglich.

**BEZUGSZEICHENLISTE**

| | | | |
|---|---|---|---|
| 1 | Haltestruktur | | |
| 11 | Unterer Basisring | 4 | Innere Seitenwand |
| 111 | Rastkerbe | 41 | Oberkante |
| 12 | Oberer Basisring | 42 | Unterkante |
| 13 | Abschlussplatte | | |
| 14 | Ausgiesser | 5 | Heizplatte |
| 15 | Handgriff | 51 | Bodenfläche |
| 151 | Druckknopf | 52 | Nut |
| 152 | Statusanzeige | 53 | Heizspirale |
| 16 | Befestigungsstruktur | | |
| 161 | Äussere Nut | 6 | Fixierring |
| 162 | Innere Nut | 61 | Befestigungsstruktur |
| 17 | Verbindungssteg | 62 | Verbindungsplatte |
| | | 63 | Hülse |
| 2 | Deckel | 64 | Rastnase |
| 22 | Deckfläche | 65 | Anpresselement |
| 23 | Druckknopf | 66 | Öffnung |
| | | | |
| 3 | Äussere Seitenwand | 7 | Anschlussbasis |
| 31 | Oberkante | 8 | Siebeinsatz |
| 32 | Unterkante | 9 | Innenraum |
| 33 | Abgeschrägte Innenfläche | 10 | Auflagepfropfen |

## Patentansprüche

1. Doppelwandiger Flüssigkeitsbehälter aufweisend
eine innere Seitenwand (4), welche eine Oberkante (41) aufweist und einen Innenraum (9) begrenzt, der zur Aufnahme einer Flüssigkeit dient,
eine ausserhalb der inneren Seitenwand (4) angeordnete äussere Seitenwand (3), welche eine Oberkante (31) aufweist,
eine Haltestruktur (1) mit einem inneren Halteelement (162), in welchem die Oberkante (41) der inneren Seitenwand (4) gehalten ist, und einem äusseren Halteelement (161), in welchem die Oberkante (31) der äusseren Seitenwand (3) gehalten ist,
**dadurch gekennzeichnet, dass**
die äussere Seitenwand (3) eine Unterkante (32) aufweist, und dass der Flüssigkeitsbehälter ein an der Haltestruktur (1) angebrachtes Fixierelement (6) aufweist, welches die Unterkante (32) der äusseren Seitenwand (3) in Bezug auf die Haltestruktur (1) fixiert.

2. Doppelwandiger Flüssigkeitsbehälter gemäss Anspruch 1, wobei die innere Seitenwand (4) und die äussere Seitenwand (3) jeweils transparent sind und die Haltestruktur (1) derart ausgebildet ist, dass der Innenraum (9) durch die innere Seitenwand (4) und die äussere Seitenwand (3) hindurch von aussen her einsehbar ist.

3. Doppelwandiger Flüssigkeitsbehälter gemäss einem der Ansprüche 1 und 2, wobei die innere Seitenwand (4) aus Glas und die äussere Seitenwand (3) aus Polycarbonat (PC) hergestellt sind.

4. Doppelwandiger Flüssigkeitsbehälter gemäss einem der vorhergehenden Ansprüche, wobei die innere Seitenwand (4) und die äussere Seitenwand (3) jeweils im Wesentlichen die Form eines nach oben und nach unten hin offenen Zylinders aufweisen.

5. Doppelwandiger Flüssigkeitsbehälter gemäss einem der vorhergehenden Ansprüche, wobei das innere Halteelement (162) und das äussere Halteelement (161) jeweils als eine umlaufende Nut ausgestaltet sind.

6. Doppelwandiger Flüssigkeitsbehälter gemäss einem der vorhergehenden Ansprüche, wobei der Flüssigkeitsbehälter ein auf dem Fixierelement (6) aufliegendes Bodenelement (5) aufweist, welches zusammen mit der inneren Seitenwand (4) den Innenraum (9) begrenzt.

7. Doppelwandiger Flüssigkeitsbehälter gemäss Anspruch 6, wobei die innere Seitenwand (4) eine Unterkante (42) aufweist, und wobei das Bodenelement (5) zwischen dem Fixierelement (6) und der Unterkante (42) der inneren Seitenwand (4) angeordnet ist.

8. Doppelwandiger Flüssigkeitsbehälter gemäss einem der Ansprüche 6 oder 7, wobei es sich beim Flüssigkeitsbehälter um einen Wasserkocher mit einer Heizvorrichtung (53) handelt, und wobei das Bodenelement (5) eine Heizplatte (5) bildet, die mit der Heizvorrichtung (53) verbunden ist.

9. Doppelwandiger Flüssigkeitsbehälter gemäss einem der Ansprüche 7 oder 8, wobei das Bodenelement (5) eine innere Nut (52) aufweist, in welche sich die innere Seitenwand (4) hinein erstreckt.

10. Doppelwandiger Flüssigkeitsbehälter gemäss Anspruch 9, wobei im inneren Halteelement (162) der Haltestruktur (1) und/oder in der inneren Nut (52) des Bodenelements (5) eine Dichtungsmasse vorgesehen ist, welche die innere Seitenwand (4) gegenüber der Haltestruktur (1) bzw. gegenüber dem Bodenelement (5) flüssigkeitsdicht abdichtet.

11. Doppelwandiger Flüssigkeitsbehälter gemäss einem der vorhergehenden Ansprüche, wobei das Fixierelement (6) und die Haltestruktur (1) gemeinsam eine äussere Nut begrenzen, in welche sich die äussere Seitenwand (3) hinein erstreckt.

12. Doppelwandiger Flüssigkeitsbehälter gemäss einem der vorhergehenden Ansprüche, wobei das Fixierelement (6) als ein Fixierring ausgebildet ist, welcher einen Aussendurchmesser aufweist, der im Wesentlichen dem Aussendurchmesser der äusseren Seitenwand (3) entspricht.

13. Doppelwandiger Flüssigkeitsbehälter gemäss einem der vorhergehenden Ansprüche, wobei die Haltestruktur (1) nach unten hin offen ausgebildet ist, und wobei das Fixierelement (6) bei der Herstellung des Flüssigkeitsbehälters von unten her in die Haltestruktur (1) einführbar ist.

14. Doppelwandiger Flüssigkeitsbehälter gemäss einem der vorhergehenden Ansprüche, wobei das Fixierelement (6) zumindest eine erste Raststruktur (64) und die Haltestruktur (1) zumindest eine zweite Raststruktur (111) aufweist, welche derart komplementär zueinander ausgebildet sind, dass das Fixierelement (6) in die Haltestruktur (1) einrastbar ist.

15. Doppelwandiger Flüssigkeitsbehälter gemäss einem der vorhergehenden Ansprüche, wobei die Haltestruktur (1) einen Ausgiesser (14) aufweist, um eine Flüssigkeit aus dem Innenraum (9) auszuschenken.

## Claims

1. A double-walled liquid container, comprising
an inner side wall (4), which has a top edge (41) and delimits an inner space (9) which serves for receiving a liquid,
an outer side wall (3), which is arranged outside the inner side wall (4) and has a top edge (31),
a retaining structure (1) having an inner retaining element (162), in which the top edge (41) of the inner side wall (4) is retained, and an outer retaining element (161), in which the top edge (31) of the outer side wall (3) is retained,
**characterized in that**
the outer side wall (3) has a bottom edge (32), and that the liquid container comprises a fixing element (6), which is attached to the retaining structure (1) and fixes the bottom edge (32) of the outer side wall (3) in relation to the retaining structure (1).

2. The double-walled liquid container as claimed in claim 1, wherein the inner side wall (4) and the outer side wall (3) are each transparent, and the retaining structure (1) is formed in such a manner that the inner space (9) is visible from the outside through the inner side wall (4) and the outer side wall (3).

3. The double-walled liquid container as claimed in either of claims 1 and 2, wherein the inner side wall (4) is produced from glass and the outer side wall (3) is produced from polycarbonate (PC).

4. The double-walled liquid container as claimed in one of the preceding claims, wherein the inner side wall (4) and the outer side wall (3) each substantially have the form of an upwardly and downwardly open cylinder.

5. The double-walled liquid container as claimed in one of the preceding claims, wherein the inner retaining element (162) and the outer retaining element (161) are each configured as a circumferential groove.

6. The double-walled liquid container as claimed in one of the preceding claims, wherein the liquid container has a base element (5), which rests on the fixing element (6) and, together with the inner side wall (4), delimits the inner space (9).

7. The double-walled liquid container as claimed in claim 6, wherein the inner side wall (4) has a bottom edge (42), and wherein the base element (5) is arranged between the fixing element (6) and the bottom edge (42) of the inner side wall (4).

8. The double-walled liquid container as claimed in either of claims 6 and 7, wherein the liquid container is a water kettle having a heating apparatus (53), and wherein the base element (5) forms a heating plate (5), which is connected to the heating apparatus (53).

9. The double-walled liquid container as claimed in either of claims 7 and 8, wherein the base element (5) has an inner groove (52), into which the inner side wall (4) extends.

10. The double-walled liquid container as claimed in claim 9, wherein a sealing compound is provided in the inner retaining element (162) of the retaining structure (1) and/or in the inner groove (52) of the base element (5) and seals the inner side wall (4) with respect to the retaining structure (1) or with respect to the base element (5) in a liquid-tight manner.

11. The double-walled liquid container as claimed in one of the preceding claims, wherein the fixing element (6) and the retaining structure (1) together delimit an outer groove, into which the outer side wall (3) extends.

12. The double-walled liquid container as claimed in one of the preceding claims, wherein the fixing element (6) is formed as a fixing ring having an external diameter which corresponds substantially to the external diameter of the outer side wall (3).

13. The double-walled liquid container as claimed in one of the preceding claims, wherein the retaining structure (1) is formed so as to be downwardly open, and wherein the fixing element (6) can be introduced into the retaining structure (1) from below during the production of the liquid container.

14. The double-walled liquid container as claimed in one of the preceding claims, wherein the fixing element (6) has at least a first latching structure (64) and the retaining structure (1) has at least a second latching structure (111), these being formed complementarily to one another in such a manner that the fixing element (6) can be latched into the retaining structure (1).

15. The double-walled liquid container as claimed in one of the preceding claims, wherein the retaining structure (1) has a spout (14), in order to pour a liquid out of the inner space (9).

## Revendications

1. Un contenant de liquide à double paroi comprenant une paroi latérale intérieure (4) comprenant une arête supérieure (41) et délimitant un espace intérieur (9) servant à loger un liquide, une paroi latérale extérieure (3) comprenant une arête supérieure (31), disposée à l'extérieur de la paroi latérale intérieure (4), une structure de fixation (1) ayant un élément de fixation intérieur (162) dans lequel l'arête supérieure (41) de la paroi latérale intérieure (4) est retenue, et un élément de fixation extérieur (161) dans lequel l'arête supérieure (31) de la paroi latérale extérieure (3) est retenue, **caractérisé en ce que** la paroi latérale extérieure (3) comprend une arête inférieure (32), et que le contenant de liquide comprend un élément de fixation (6) monté sur la structure de fixation (1), lequel fixe l'arête inférieure (32) de la paroi latérale extérieure (3) par rapport à la structure de fixation (1).

2. Le contenant de liquide à double paroi selon la revendication 1, dans lequel la paroi latérale intérieure (4) et la paroi latérale extérieure (3) sont respectivement transparentes et la structure de fixation (1) est formée de sorte que l'espace intérieur (9) peut être consulté depuis l'extérieur à travers la paroi latérale intérieure (4) et la paroi latérale extérieure (3).

3. Le contenant de liquide à double paroi selon une des revendications 1 et 2, dans lequel la paroi latérale intérieure (4) est en verre et la paroi latérale extérieure (3) est en polycarbonate.

4. Le contenant de liquide à double paroi selon une des revendications précédentes, dans lequel la paroi latérale intérieure (4) et la paroi latérale extérieure (3) sont présentes respectivement essentiellement en forme d'un cylindre ouvert vers le haut et le bas.

5. Le contenant de liquide à double paroi selon une des revendications précédentes, dans lequel l'élément de fixation intérieure (162) et l'élément de fixation extérieure (161) sont respectivement formés comme rainure périphérique.

6. Le contenant de liquide à double paroi selon une des revendications précédentes, dans lequel le contenant de liquide comprend un élément de fond en appui sur l'élément de fixation (6), lequel limite l'espace intérieur (9) ensemble avec la paroi latérale intérieure (4).

7. Le contenant de liquide à double paroi selon la revendication 6, dans lequel la paroi latérale intérieure (4) comprend une arête inférieure (42) et dans lequel l'élément de fond (5) est arrangé entre l'élément de fixation (6) et l'arête inférieure (42) de la paroi latérale intérieure (4).

8. Le contenant de liquide à double paroi selon une des revendications 6 ou 7, dans lequel le contenant de liquide est une bouilloire avec un dispositif de chauffage (53), et dans lequel l'élément de fond (5) forme une plaque chauffante (5) connectée avec le dispositif de chauffage (53).

9. Le contenant de liquide à double paroi selon une des revendications 7 ou 8, dans lequel l'élément de fond (5) comprend une rainure intérieure (52), dans laquelle la paroi latérale intérieure (4) s'étend.

10. Le contenant de liquide à double paroi selon la revendication 9, dans lequel dans l'élément de fixation intérieur (162) de la structure de fixation (1) et/ou dans la rainure intérieure (52) de l'élément de fond (5), un matériau d'étanchéité est prévu, lequel étanche de manière étanche au liquide la paroi latérale intérieure (4) par rapport à la structure de fixation (1), respectivement par rapport à l'élément de fond (5).

11. Le contenant de liquide à double paroi selon une des revendications précédentes, dans lequel l'élément de fixation (6) et la structure de fixation (1) limitent ensemble une rainure extérieure, à l'intérieure de laquelle la paroi latérale extérieure (3) s'étend.

12. Le contenant de liquide à double paroi selon une des revendications précédentes, dans lequel l'élément de fixation (6) est formé en tant qu'anneau de fixation, lequel présente un diamètre extérieur qui correspond essentiellement au diamètre extérieur de la paroi latérale extérieure (3).

13. Le contenant de liquide à double paroi selon une des revendications précédentes, dans lequel la structure de fixation (1) est formée de manière ouverte vers le bas et dans lequel l'élément de fixation (6) peut être inséré depuis le bas dans la structure de fixation (1) lors de la fabrication du contenant de liquide.

14. Le contenant de liquide à double paroi selon une des revendications précédentes, dans lequel l'élément de fixation (6) comprend au moins une première structure à encliquetage (64) et la structure de fixation (1) comprend au moins une deuxième structure à encliquetage (111), lesquelles sont formées de manière complémentaire de sorte que le l'élément de fixation (6) peut être encliqueté dans la structure de fixation (1).

15. Le contenant de liquide à double paroi selon une des revendications précédentes, dans lequel la structure de fixation (1) comprend un bec verseur (14) pour déverser un contenu depuis l'espace intérieur (9).
